# EUROPÄISCHE PATENTSCHRIFT

(11) **EP 1 600 756 B1**
(45) Veröffentlichungstag und Bekanntmachung des Hinweises auf die Patenterteilung: **06.12.2006**
(21) Anmeldenummer: 05006082.1
(22) Anmeldetag: 19.03.2005
(51) Int. Cl.: G01M 17/007

(54) **Crashsimulationsanlage für Kraftfahrfzeuge**
Device for simulating a vehicle crash
Dispositif pour la simulation de collision d'un véhicule

(30) Priorität: 28.05.2004 DE 102004027221
(43) Veröffentlichungstag der Anmeldung: 30.11.2005
(73) Patentinhaber: IAV GmbH Ingenieurgesellschaft Auto und Verkehr, 10587 Berlin (DE)
(72) Erfinder: Quedenbaum, Lutz, 30167 Hannover (DE); Tousen, Mamdouh, Dr., 38518 Gifhorn (DE); Weikard, Fritz, 38321 Denkte (DE)
(74) Vertreter: Bürger, Peter

(56) Entgegenhaltungen:
- DE-A1- 19 805 512
- DE-A1- 19 857 429
- US-A- 5 872 321

## Beschreibung

Die Erfindung betrifft eine Crashsimulationsanlage für Kraftfahrzeuge nach dem Oberbegriff des Patentanspruches 1.

Allgemein bekannt sind Crashtestanlagen, bei denen ein Fahrzeug mit einer definierten Geschwindigkeit gegen eine feststehende Barriere gefahren wird. Aus der sich im Versuch ergebenden Deformation des Fahrzeugs sowie der Deformation der im Innenraum angeordneten Puppen, sogenannten Dummys, und aus den auftretenden Kräften und Beschleunigungswerten können Daten gewonnen werden, die Auswirkungen von Unfällen auf Fahrzeug und Insassen beschreiben. Diese Crashtests sind allgemein bekannt und wichtiger Bestandteil des Tests und der Entwicklung von Fahrzeugen hinsichtlich der Fahrzeugsicherheit. Es werden dabei sowohl Frontalcrashtests (Aufprall auf eine zur Fahrzeugrichtung senkrecht stehende Barriere) als auch Crashtests unter einem vorgeschriebenen Winkel, vorzugsweise 30° Abweichung der Barriere aus der Senkrechten zur Fahrzeugbewegungsrichtung, gefahren.
Crashtests mit realen Fahrzeugen sind sehr kostenintensiv und aufwendig, da das jeweilige Fahrzeug zumindest teilweise deformiert wird sowie darin angeordnete Sensorik und Teile des Messaufbaus nicht wieder verwendet werden können. Insbesondere in einem frühen Stadium der Fahrzeugentwicklung sind Prototypenfahrzeuge sehr teuer und stehen nicht in ausreichender Menge zur Verfügung.
Daher ist es bereits vorgeschlagen worden, Anlagen zur Crashsimulation zu nutzen. Hier werden Fahrzeuge oder Teile davon auf einem beweglichen Schlitten platziert, der jeweils stark beschleunigt oder abgebremst wird. Auf das auf dem Schlitten fest angeordnete Fahrzeug wirken dabei starke Beschleunigungs- oder Verzögerungskräfte ein. Der Antrieb des Schlittens bzw. dessen Bremseinrichtung ist so gestaltet, dass reale, bei Unfallsituationen bzw. beim Fahrzeugcrash auftretende Beschleunigungswerte erreicht bzw. nachgebildet werden können. Die beschriebene Crashsimulation ist insbesondere für die Gestaltung des Interieurs eines Fahrzeugs und die Auswirkungen auf die Insassen nützlich. Der Vorteil ist die Wiederholbarkeit mit weitgehend identischem Test-Aufbau und die Kostenersparnis, da ein modifiziertes Fahrzeug bzw. der Testaufbau weitgehend wiederverwendet werden können.

Derartige Anlagen wurden bereits vorgeschlagen. So zeigt die DE 195 11 422 A1 eine Crashtestanlage, bei der ein auf einem Schlitten fest montiertes Fahrzeug hinsichtlich seiner Beschleunigung geregelt durch einen hydraulischen Antrieb beschleunigt bzw. abgebremst wird. Das Fahrzeug ist dabei fest auf dem Schlitten angeordnet.
Derartige Gestaltungen bilden das reale Crashverhalten nur ungenügend ab. Bewegungen des Fahrzeugs während realer Unfallsituationen z. B. Nickbewegungen um die Fahrzeugquerachse können mit diesem Aufbau nicht realisiert werden.

Zur Verbesserung der Abbildung der auftretenden Kräfte und Beschleunigungen ist in der DE 198 57 429 A1 vorgeschlagen, den Schlitten einer Crashsimulationsanlage so auszubilden, dass sowohl Längs- als auch Vertikalbeschleunigungen auf das Fahrzeug einwirken können. Hier ist es notwendig, vorher rechnerisch oder durch Tests zu ermitteln, welche Vertikalbeschleunigungen beim Fahrzeugcrash auftreten. Die Schlittenanordnung wird durch die zusätzlichen Aktuatoren kompliziert und teuer. Die Abbildung des realen Crashverhaltens ist dabei von der Genauigkeit der berechneten oder gemessenen Beschleunigungsverläufe abhängig. Für verschiedene Fahrzeugtypen müssen dabei verschiedene Beschleunigungsprofile vorgegeben werden.

Die DE 198 05 512 A1 zeigt eine Schlittenanordnung für eine Crashtestanlage bei der Nickbewegungen um die Fahrzeuglängsachse simuliert werden können. Die Schlittenbahn oder das Fahrzeug sind dabei auf Stützen montiert, die mit unterschiedlicher Stützkraft beaufschlagbar sind. Durch ein Nachlassen der Stützkraft bei Beschleunigung des Schlittens sollen die bei einem realen Fahrzeugcrash auftretenden Nickbewegungen des Fahrzeugs simuliert werden. Der Schlitten ist dabei aufwendig mit Aktuatoren bestückt, welche steuerbar den Gesamtaufbau abstützen. In einer weiteren Ausführung ist die gesamte Schlittenbahn beweglich abgestützt. Zur Simulation der notwendigen Beschleunigungen müssen erhebliche Massen bewegt werden. Die Abbildung des realen Crashverhaltens ist dabei ebenfalls von der Genauigkeit der berechneten oder gemessenen Beschleunigungsverläufe abhängig. Für verschiedene Fahrzeugtypen müssen dabei verschiedene Beschleunigungsprofile vorgegeben werden.

Der Erfindung liegt daher die Aufgabe zugrunde, eine Crashsimulationsanlage für Kraftfahrzeuge derart zu gestalten, dass mit einem einfachen Aufbau ein reproduzierbares wirklichkeitsnahes Crashverhalten nachgebildet werden kann, bei dem sowohl Nick- als auch Drehbewegungen abgebildet werden können.

Diese Aufgabe wird bei gattungsgemäßen Crashsimutationsanlagen erfindungsgemäß durch die Merkmale der Patentansprüche 12 und 18 gelöst, wobei sich vorteilhafte Ausgestaltungen aus den abh. Ansprüchen ergeben.

Die erfindungsgemäße Crashsimulationsanlage für Kraftfahrzeuge besteht aus einem auf einer Bahn beweglichen Schlitten, an den ein Fahrzeug oder die Teile eines Fahrzeugs Mittel- oder unmittelbar angekoppelt sind. Das Fahrzeug kann hierbei vorzugsweise an der Front abgeschnitten sein, so das nur Teile des Fahrzeuges auf dem Schlitten angeordnet werden. Es ist jedoch auch möglich das Gesamtfahrzeug auf dem Schlitten zu positionieren. Der Schlitten kann dabei auf der Bahn zusätzlich geführt sein und wird von einer Antriebs- und/oder Bremseinrichtung bewegt. Über die Antriebs- und/ oder Bremseinrichtung kann auf den Schlitten eingewirkt werden, so dass gewünschte Geschwindigkeits- bzw. Beschleunigungsprofile erzeugt werden können. Die Beschleunigung zum Antrieb bzw. das Abbremsen des Schlittens können dabei permanent oder als Impuls erfolgen. Ein Auffahren in eine Bremseinrichtung oder das Beschleunigen in eine Katapulteinrichtung sind ebenso möglich wie der gesteuerte Antrieb bzw. ein Bremsen des Schlittens selbst.
Die dem Schlitten mittel- oder unmittelbar gehaltenen Fahrzeugteile stützen sich an einer fest mit dem Schlitten gekoppelten Barriere ab. Der Abstützpunkt ist dabei hinsichtlich seiner Relativlage an der Barriere nicht starr mit dieser verbunden. Erfindungsgemäß vorteilhaft wird eine Veränderung der Relativlage des Abstützpunktes zur Barriere im Verlauf des Crashtests ermöglicht.

Die erfindungsgemäße Abstützung des Schlittens ermöglicht dabei einen flexiblen Aufbau des Schlittens. Durch die auf dem Schlitten angeordnete Barriere können Frontalcrashtests und Crashtests, die unter einem bestimmten Winkel zur Barriere erfolgen, realitätsnah nachgebildet werden. Die Barriere weist dafür gegenüber der Bewegungsrichtung des Schlittens in horizontaler Ebene einen von 90° verschiedenen Winkel auf. Sogenannte 30°-Crashtests sind durch eine entsprechende Einstellung der Barriere (60° Winkel der Barriere gegenüber der Bewegungsrichtung des Schlittens in horizontaler Ebene) durchführbar. In einer Weiterbildung der Erfindung ist die Barriere in ihrem Winkel einstellbar und kann somit jeweils vor dem Crashtest entsprechend angepasst werden. Sie wird dann für den jeweiligen Test wieder fest mit dem Schlitten verbunden.

Die Anordnung der Barriere in einem von 90° verschiedenen Winkel gegenüber der Bewegungsrichtung des Schlittens in horizontaler Ebene ermöglicht realitätsnahe Crashtests, da das Fahrzeug ähnlich der realen Unfallsituation geradlinig auf das Hindernis beschleunigt wird und dann entsprechend dem eingestellten Winkel abgleitet. Ein Wegdrehen des Fahrzeugs an der Barriere kann damit aus der geraden Bewegungsrichtung heraus simuliert werden.

Die erfindungsgemäße Abstützung erlaubt durch den veränderlichen Abstützpunkt eine realitätsnahe Bewegung des Fahrzeuges bzw. der auf dem Schlitten angeordneten Fahrzeugteile. Es können sowohl Nickbewegungen um die Fahrzeugquerachse als auch Drehbewegungen um eine vertikal durch das Fahrzeug gelegte Achse erfolgen. Jegliche Kombinationen dieser Bewegungen sind gleichfalls möglich. Die Bewegung bzw. die einwirkenden Beschleunigungen sind dabei sehr realitätsnah, da eine Bewegung der Abstützung an der Barriere entsprechend der gefahrenen Beschleunigung / Verzögerung entsprechend einer realen Unfallsituation automatisch erfolgt.

Erfindungsgemäß vorteilhaft kann die Barriere gegenüber dem Schlitten in vertikaler Ebene einen von 90° abweichenden Winkel gegenüber der Bewegungsrichtung des Schlittens aufweisen. Die Barriere fördert in dieser Gestaltung die Nickbewegung des Fahrzeugs um dessen Querachse und bildet somit sehr gut ein reales Unfallverhalten nach. Erfindungsgemäß ist das Fahrzeug bzw. sind die auf dem Schlitten angeordneten Fahrzeugteile fest mit einem Koppelelement verbunden. Das Koppelelement stützt sich dabei über ein fest mit diesem verbundenes Auflageelement an der Barriere ab, welches nicht starr mit der Barriere verbunden ist und somit die Möglichkeit der Relativbewegung des Fahrzeuges zur Barriere ermöglicht.
In einer vorteilhaften Gestaltung ist das mit dem Fahrzeug fest verbundene Koppelelement gegenüber dem Auflageelement in seiner Winkellage veränderbar, so dass einer Relativbewegung des mit dem Koppelelement fest verbundenen Fahrzeuges gegenüber der Barriere ermöglicht wird, wobei das Auflageelement mit seiner der Barriere zugewandten Fläche an diesem angelegt bleibt. Das Koppelelement und das Auflageelement können in einer weiteren Ausgestaltung der Erfindung dabei aus einer Einheit bestehen. Möglich ist die Halterung in einem sogenannten Kugelgelenk, welches einen Winkelversatz des Koppelements gegenüber dem Auflageelement in horizontaler und vertikaler Ebene erlaubt. Ein Schwenken des Koppelelementes um das Auflageelement ist in jeglicher Bewegungsrichtung möglich. Das Fahrzeug kann sich demnach entsprechend dem realen Unfallverhalten gemäß der einwirkenden Beschleunigungen, seinem Schwerpunkt und der Auflageposition der Abstützung an der Barriere bewegen.

In einer vorteilhaften Ausgestaltung besteht das Auflageelement aus einer Koppelstange und einer Koppelauflage. Diese können über das vorbeschriebene Kugelgelenk miteinander verbunden sein, so dass der oben beschriebene Winkelversatz des Koppelements gegenüber dem Auflageelement in horizontaler und/oder vertikaler Ebene möglich ist, wobei Koppelstange und Koppelauflage miteinander verbunden bleiben.
In einer weiteren Ausgestaltung ist es vorteilhaft, die Koppelauflage an der Barriere zu führen. Damit wird ein Verbleiben des Fahrzeugs auf dem Schlitten gesichert. Die Relativbewegung des Koppelelementes gegenüber der Barriere kann damit endlagenbegrenzt werden. In einer vorteilhaften Ausgestaltung kann die Koppelauflage in einer vertikalen Nut in der Barriere geführt sein und somit Nickbewegungen um die Fahrzeugquerachse ermöglichen. Zusätzlich kann durch die Anordnung eines Kugelgelenks zwischen Koppelstange und Koppelauflage eine Schwenkbewegung um die Koppelstelle zwischen Koppelstange und Koppelauflage ermöglicht werden.

Für die Einstellung von realitätsnahen Parametern der Relativbewegung zwischen der Barriere und dem über das Koppel- und/oder Auflageelement an der Barriere gehaltenen Fahrzeugs ist der Widerstand, den Koppel- und/oder Auflageelement der Relativbewegung entgegensetzen, einstellbar. Dies kann erfindungsgemäß durch die gezielte Gestaltung der Oberflächenpaarung von Koppelauflage und Barriere und/oder die gezielte Gestaltung der Oberflächenpaarung von Koppelstange und Koppelauflage erfolgen. Eine weitere Ausgestaltung ist die Verwendung eines bezüglich seines Bewegungswiderstandes einstellbaren Gelenks zwischen Koppelauflage und Koppelstange.

Erfindungsgemäß vorteilhaft ist der Abstützpunkt des Fahrzeuges an der Barriere bezüglich des Schwerpunktes des Fahrzeuges einstellbar. Die Lage des Abstützpunktes in Bezug zum Massenschwerpunkt des Fahrzeugs bestimmt die Bewegungsbahn des Fahrzeuges mit.

In vorteilhafter Weise ist das auf dem Schlitten angeordnete Fahrzeug bzw. sind die Fahrzeugteile elastisch gegen den Schlitten abgestützt. In einer weiteren Ausführung kann dies durch wenigstens eine Feder erfolgen. Die Feder kann in einer Ausgestaltung lediglich stützend zwischen Schlitten und Fahrzeug wirken und jeweils nur einseitig an Schlitten oder Fahrzeug befestigt sein. In einer weiteren Ausgestaltung ist die Feder oder ein gleichartiges elastisch wirkendes Element an Schlitten und Fahrzeug gehalten. Mit der Federgestaltung wird in beiden Fällen die Bewegungsbahn des Fahrzeuges bei Beschleunigung oder Verzögerung beeinflusst. Entsprechend der Beschleunigung und aufgebrachten Stützkraft erfolgt eine Nickbewegung des Fahrzeuges, das gegen die Barriere abgestützt ist, wobei sich der Auflagepunkt des Auflageelementes an der Barriere auf dieser verändert.
Die Federn können in einer weiteren Ausgestaltung der Erfindung ebenfalls durch die fahrzeugeigenen Federn gebildet sein. Damit wird eine realitätsnahe Nickbewegung des Fahrzeugs erreicht. Wird wie im nachfolgend exemplarisch dargestellten Ausführungsbeispiel die Front des Fahrzeuges entfernt und ein Simulationsmodell, welches weitgehend aus Innenraum und der umliegenden, die Fahrerkabine begrenzenden Karosserie besteht, genutzt, so werden die zusätzlichen elastischen Abstützpunkte am Fahrzeug benötigt.
Zur Sicherung des Fahrzeuges oder zur Vorgabe bestimmter Bewegungsbahnen können zusätzlich weitere Führungs- oder Sicherungselemente für das Fahrzeug vorgesehen sein.

In einer weiteren Ausgestaltung der Erfindung stützt sich das Fahrzeug an einem fest mit dem Schlitten verbundenen Abstützelement ab. Die Abstützung ist auch hier so gestaltet, dass ein Entlanggleiten des Fahrzeuges bzw. von dessen Front am Abstützelement erfolgen kann. Zur Simulation von Beschleunigungen, die bei Unfallsituationen auftreten, bei denen der Aufprall des Fahrzeuges gegen eine Schräge erfolgt, ist in dieser Ausführung die Schräge an der Fahrzeugfront oder an einem fest damit verbundenen Koppelelement angeordnet.

Weitere Einzelheiten der Erfindung werden nachfolgend anhand der Zeichnungen von schematisch dargestellten Ausführungsbeispielen beschrieben. Diese stellen exemplarische Verkörperungen des Erfindungsgegenstandes dar.

Hierbei zeigen:
- Figur 1: eine schematische Darstellung der erfindungsgemäßen Crashsimulationsanlage in einer Seitenansicht,
- Figur 2 und 3: eine schematische Darstellung der erfindungsgemäßen Crashsimulationsanlage in einer Ansicht von oben,
- Figur 4: eine Detaildarstellung des Auflagepunktes mit angrenzender Barriere, Koppelelement und Auflageelement,
- Figur 5: eine Detaildarstellung des Auflagepunktes mit angrenzender Barriere, Koppelelement und Auflageelement mit einer Führung der Koppelauflage,
- Figur 6: eine Detaildarstellung des Auflagepunktes mit angrenzender Barriere, Koppelelement und Auflageelement,
- Figur 7: eine Detaildarstellung des Auflagepunktes mit angrenzender Barriere, Koppelelement, Auflageelement und Schlitten, wobei die Barriere in vertikaler Ebene gegen den Schlitten geneigt ist,
- Figur 8: eine schematische Darstellung der erfindungsgemäßen Crashsimulationsanlage in einer Ansicht von oben.

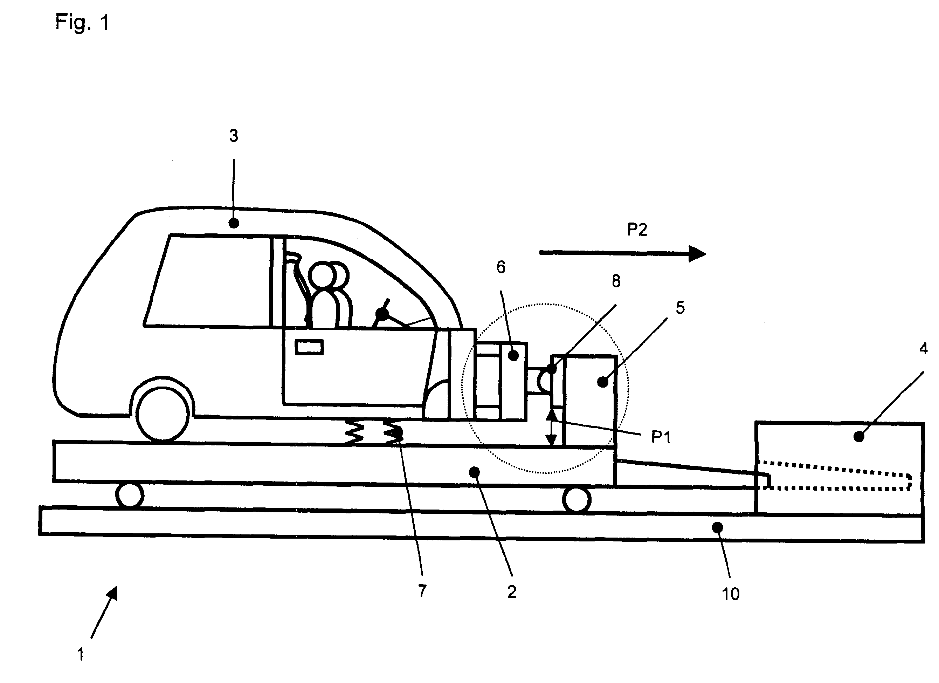

In Fig. 1 ist die schematische Darstellung der erfindungsgemäßen Crashsimulationsanlage 1 in einer Seitenansicht dargestellt. Ein Fahrzeug 3 oder wie dargestellt ein Teil eines Fahrzeuges 3 sind auf einem Schlitten 2 angeordnet und über ein Koppelelement 6, das fest mit dem Fahrzeug verbunden ist und ein Auflageelement 8 an eine Barriere 5 abgestützt.
Das Auflageelement 8 kann dabei wenigstens in vertikale Richtung an der Barriere 5 entlang gleiten. Der dargestellte Pfeil P1 symbolisiert diese Bewegung. Die Barriere 5 ist fest an den Schlitten 2 gekoppelt und kann auch als Teil des Schlittens 2 ausgeführt sein. In einer möglichen Ausgestaltung ist sie in ihrem Winkel in horizontaler und/oder vertikaler Ebene zum Schlitten 2 einstellbar bzw. geneigt angeordnet. Der Schlitten 2 ist auf der Crashtestanlage 1 bewegbar und kann zur Spurstabilisierung auf dieser geführt sein. Die Crashtestanlage 1 ist mit einer Brems- und/oder Beschleunigungseinheit ausgestattet, die den Schlitten beschleunigen und/oder verzögern kann. Derartige Anlagen, bei denen durch Bremsen eines auf eine vordefinierte Geschwindigkeit beschleunigten Schlittens oder durch Beschleunigung des Schlittens aus einer Ruhelage durch die auftretenden Beschleunigungen am Fahrzeug Unfallsituationen simuliert werden, sind Stand der Technik, weshalb auf deren detaillierte Beschreibung verzichtet wird. In der erfindungsgemäßen Ausgestaltung der Crashtestanlage 1 ist das Fahrzeug über Koppel- 6 und Auflageelement 8 nicht starr mit der Barriere verbunden. Vielmehr liegt in einer bevorzugten Ausführung der Erfindung das Fahrzeug lediglich an der Barriere 5 an, wobei die Beschleunigungskräfte sich an der Barriere 5 abstützen. Weil die Barriere 5 nicht starr mit dem Auflageelement 8 gekoppelt ist, kann das Auflageelement 8 an der Barriere 5 entlang gleiten und durch die BeschleunigungNerzögerung des Schlittens werden reale Bewegungskurven des Fahrzeuges nachvollzogen. Das Fahrzeug 3 sitzt im dargestellten Ausführungsbeispiel mit seinen Hinterrädern auf dem Schlitten 3 auf und stützt sich über Federn 7 an diesem ab. Die Federn 7 sind im Ausführungsbeispiel einseitig fest am Schlitten 3 angeordnet. Diese können jedoch gleichfalls einseitig fest am Fahrzeug 3 angeordnet sein oder beidseitig fahrzeug- sowie schlittenfest montiert sein. Die Federn 7 erzeugen eine Stützkraft gegen das Fahrzeuggewicht und wirken bei Beschleunigungen, positiven wie negativen (Verzögerung) des Schlittens den Nickbewegungen des Fahrzeuges entgegen. Sind die Federn 7 fahrzeug- und schlittenfest montiert, so halten sie das Fahrzeug 3 zusätzlich zur Stützbewegung gegen ein zu weites "Abheben" vom Schlitten 2. Eine Schwenkbewegung des Fahrzeuges bei Beschleunigung des Schlittens 2 um den Auflagepunkt des Auflageelements 8 ist dabei erwünscht, da diese Bewegung das realitätsnahe Crashverhalten wiederspiegelt. Der Auflagepunkt kann sich dabei lateral und vertikal verändern, wodurch Dreh- und/oder Nickbewegungen des Fahrzeuges 3 hervorgerufen werden. Ein Abheben des Fahrzeuges 3 mit seinen Hinterrädern ist dabei ebenfalls möglich. Anstelle der Hinterräder kann das Fahrzeug 3 gleichfalls auf weiteren, hier nicht dargestellten Federn stehen oder über eine ebenfalls nicht dargestellte gelenkige Führung am Schlitten beweglich gehalten sein.

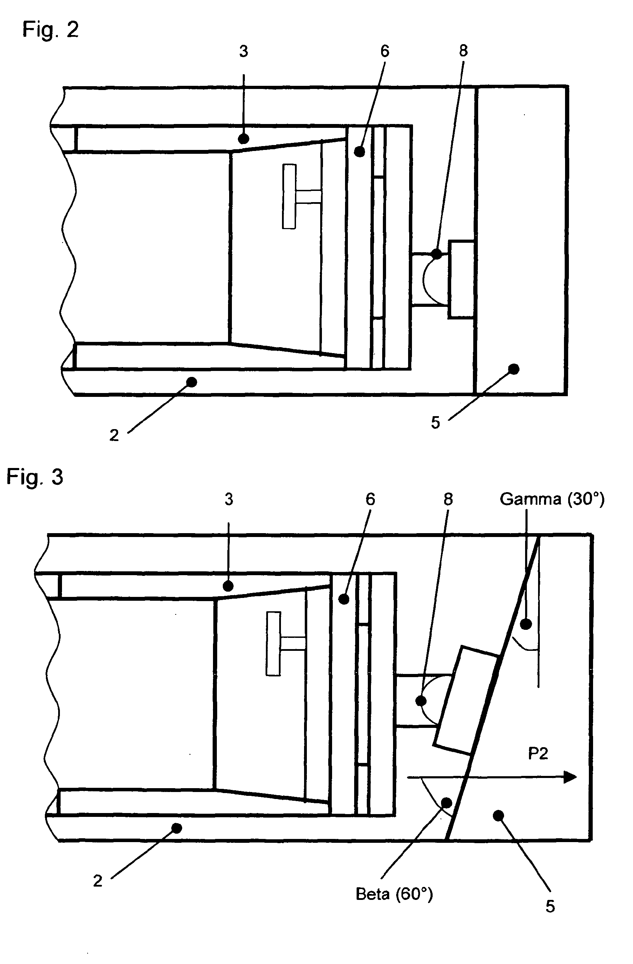

Fig. 2 zeigt die schematische Darstellung der Crashsimulationsanlage in einer Ansicht von oben. Zur Figur 1 identische Bezugszeichen werden dabei gleichlautend verwendet. Das Fahrzeug 3 ist über das daran fest angeordnete Koppelelement 6 und das mit dem Koppelelement verbundene Auflageelement 8 gegen die Barriere 5 abgestützt. Die Anlage des Auflageelementes am Koppelelement und letztlich am Fahrzeug erfolgt bezogen auf die Fahrzeugmittelachse in Längsrichtung außermittig. Dies hat bei Beschleunigung oder Verzögerung des Schlittens eine Drehbewegung des Fahrzeuges zur Folge. Die Anordnung kann jedoch auch zentrisch ausgeführt sein. Die Darstellung ist hierbei nur exemplarisch gewählt.

Fig. 3 zeigt die schematische Darstellung der Crashsimulationsanlage in einer Ansicht von oben. Zur den vorherigen Figuren identische Bezugszeichen werden hier und nachfolgend gleichlautend verwendet. Abweichend von den vorher dargestellten Ausführungsbeispielen weist die Barriere 5 einen von 90° abweichenden Winkel Beta bezogen auf die Bewegungsrichtung (symbolisiert durch Pfeil P2) des Schlittens 2 in horizontaler Ebene auf. Dargestellt ist hier eine Vorzugsvariante mit einem Winkel Beta von 60°, so dass ein sog. 30°-Crashtest (Winkel Gamma = 30°) mit der erfindungsgemäßen Crashtestanlage 1 simuliert werden kann. Die Winkelangaben sind hier als vorzugswerte zu verstehen. Der Winkelbereich kann um diesen Wert schwanken, um reale Crashsituationen nachzubilden. So kann z. B. ein beschleunigtes seitliches Abrutschen des Fahrzeuges auf dem Schlitten verzögert werden indem die Barriere flacher gestellt wird, d.h. ein Winkel von Gamma < 30° (Beta >60°) eingestellt wird. Die nicht starre Verbindung von Auflageelement 8 und Barriere 5 gestattet hierbei erfindungsgemäß eine Bewegung des Auflageelementes 8 entlang der Barriere relativ zu dieser. Unfallnahe Beschleunigungs- sowie Bewegungskurven des auf dem Schlitten 2 angeordneten Fahrzeuges 3 werden dadurch ermöglicht. Auflageelement und Koppelelement sind dabei gelenkig miteinander verbunden, so dass die Auflagefläche gegen die Barriere 5 gestützt bleibt, auch wenn das Fahrzeug seitlich an der Barriere entlang gleitet oder durch das Abrutschen" entlang der Barriere 5 in vertikale Richtung eine Nickbewegung ausführt.

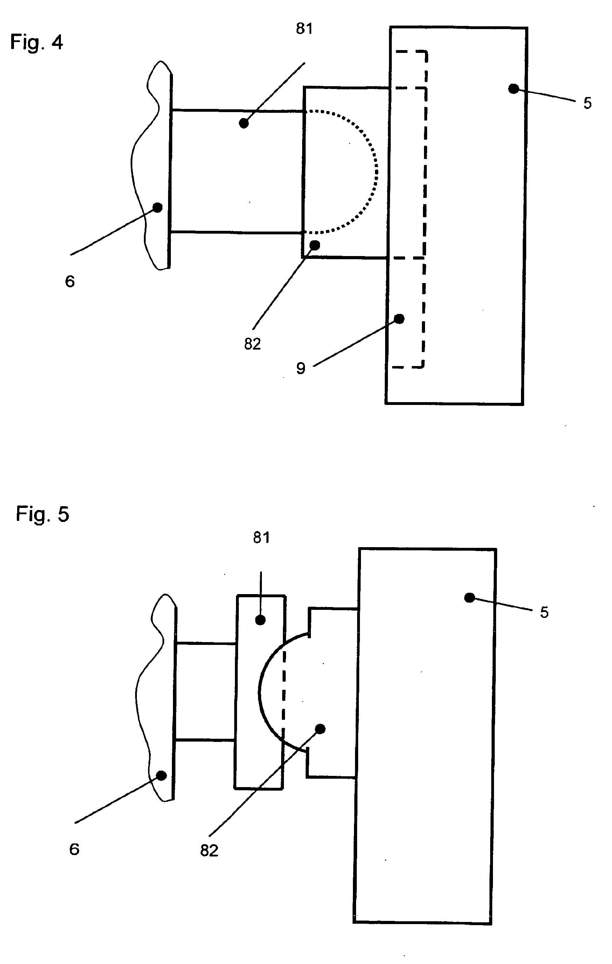

Figur 4 zeigt eine stark schematisierte Darstellung des Auflagepunktes mit angrenzender Barriere. Das Auflageelement ist in dieser Ausgestaltung in Koppelstange und Koppelauflage geteilt. Beide sind gelenkig miteinander verbunden. Die Verbindung ist derart gestaltet, dass die Koppelstange in jede Richtung um die Koppelauflage schwenken kann.

Der Vorteil dieser Anordnung ist, dass bei Relativbewegung zwischen Koppelauflage 82 und Barriere 5, die Koppelauflage 82 plan auf der Oberfläche der Barriere anliegt. Zwischen Koppelauflage und Koppelstange kann dabei in einer weiteren Ausführung ein Kugelgelenk verbaut sein, das die beiden Teile gelenkig miteinander aber unlösbar voneinander verbindet. Die Koppelauflage dient hierbei der Verminderung der Flächenpressung. Es ist jedoch bei geeigneter Wahl der Materialpaarung von Koppelstange und Barriere auch möglich die Koppelstange direkt an der Barriere abzustützen.

Figur 5 zeigt stark schematisiert den Auflagepunkt mit angrenzender Barriere 5 in einer Ausführungsform mit Lateralführung der Koppelauflage 82 an der Barriere 5. Dafür ist in die Barriere 9 eine Nut, die auch als Kugel- oder T-Führung ausgestaltet sein kann, eingearbeitet, in der ein entsprechend gearbeitetes Gegenstück an der Koppelauflage 82 eingesetzt wird. Die Nut ist so gestaltet, dass die Koppelauflage in lateraler Richtung bewegbar ist, während die Koppelstange schwenkbar in der Koppelauflage gelagert ist. Die Koppelstange kann dabei wiederum in alle Richtungen Schwenkbewegungen ausführen, lediglich die Bewegungsrichtung der Koppelauflage 82 an der Barriere 5 wird durch die Nut vorgegeben und begrenzt.

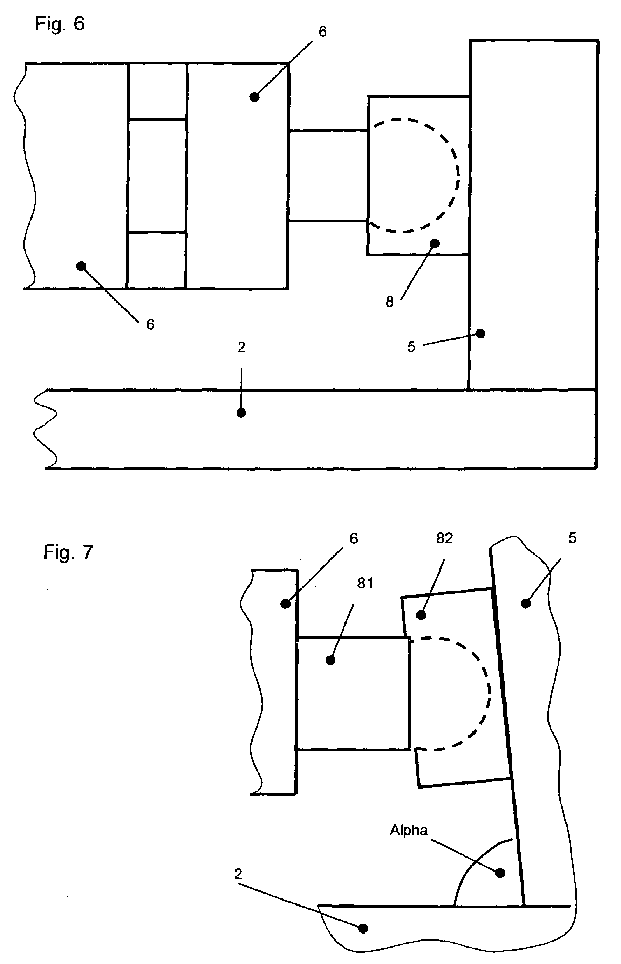

Figur 6 zeigt eine weitere Ausführungsform, bei der das Koppelelement und Koppelstange einstückig ausgebildet sind und über ein Kugelgelenk verbunden die Koppelauflage an dem vom Fahrzeug abgewandten Ende angekoppelt ist. Die Koppelauflage stützt sich gegen die Barriere 5 ab.

Figur 7 zeigt eine weitere Ausführung des Schlittens, bei dem die Barriere 5 gegenüber dem Schlitten in vertikaler Ebene geneigt ist, also einen einschließenden Winkel Gamma aufweist, der von 90° abweicht. Die Gestaltung fördert die Nickbewegung des Fahrzeuges, da aufgrund der Beschleunigung der Schlitten mit seinem Auflagepunkt über Koppelelement und Koppelauflage gegen die Barriere gedrängt wird und durch die Neigung nach unten verlagert wird.

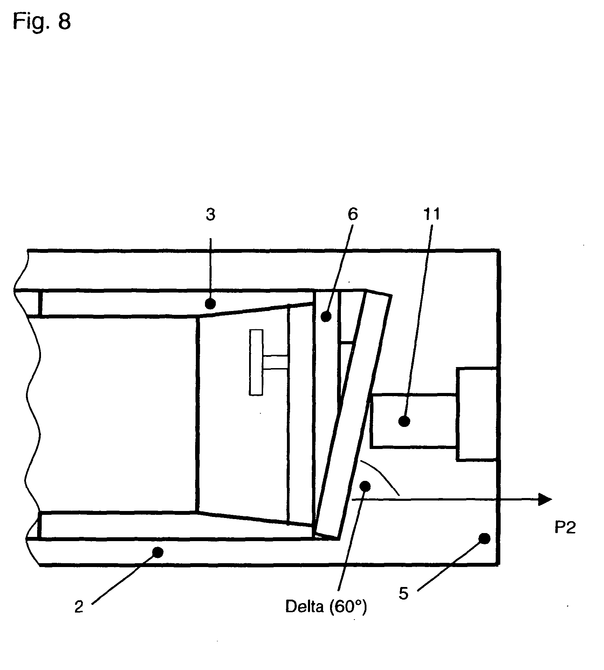

Figur 8 zeigt die schematische Darstellung der Crashsimulationsanlage in einer Ansicht von oben. Zu den vorherigen Figuren identische Bezugszeichen werden hier gleichlautend verwendet. Abweichend von den vorher dargestellten Ausführungsbeispielen weist der Schlitten keine Barriere im eigentlichen Sinne auf. Vielmehr stützen sich die auf dem Schlitten 2 angeordneten Fahrzeugteile 3 gegen ein fest mit dem Schlitten verbundenes Abstützelement ab. Das Abstützelement 11 kann dabei auch Teil des Schlittens 2 selbst sein. Die Front des Fahrzeuges ist in der gewählten Darstellung verkürzt und ein Koppelelement 6 begrenzt das Fahrzeug nach vorn. Es ist jedoch auch möglich, das Koppelelement aus Fahrzeugteilen zu bilden. Die Front des Fahrzeuges weist dabei einen von 90° abweichenden Winkel Delta bezogen auf die Bewegungsrichtung (symbolisiert durch Pfeil P2) des Schlittens 2 in horizontaler Ebene auf. Dargestellt ist hier eine Vorzugsvariante mit einem Winkel Delta von 60°, so dass ein sog. 30°-Crashtest mit der erfindungsgemäßen Crashtestanlage 1 simuliert werden kann. Die Winkelangaben sind hier als Vorzugswerte zu verstehen. Der Winkelbereich kann um diesen Wert schwanken, um reale Crashsituationen nachzubilden. So kann z. B. ein beschleunigtes seitliches Abrutschen des Fahrzeuges auf dem Schlitten verzögert werden, indem die Front flacher gestellt wird, d. h. ein Winkel von Delta >60° eingestellt wird. Die nicht starre Verbindung von Koppelelement 6 und Abstützelement 11 gestattet hierbei erfindungsgemäß eine Bewegung des Koppelelements 6 entlang des Abstützelements 11. Unfallnahe Beschleunigungs- sowie Bewegungskurven des auf dem Schlitten 2 angeordneten Fahrzeuges 3 werden dadurch ermöglicht.

Als Abstützpunkt des Fahrzeugs gegenüber der Barriere oder dem Abstützelement wird sowohl eine Punktauflage, z. B. die der Koppelstange an der Barriere, als auch die flächige Auflage des Auflageelements verstanden. Der Abstützpunkt ist in der Anmeldung generell als der Punkt bzw. die Fläche zu verstehen, an der sich das Fahrzeug unmittelbar oder über die daran angeordneten Koppelelemente mittelbar am Abstützelement oder der Barriere anlegt. Der Abstützpunkt kann sich dabei in seiner Relativlage gegenüber der Barriere bzw. dem Abstützelement verlagern.

### Bezugszeichenliste

- 1: Crashsimulationsanlage
- 2: Schlitten
- 3: Fahrzeug
- 4: Brems- oder Beschleunigungseinrichtung
- 5: Barriere
- 6: Koppelelement
- 7: Feder
- 8: Auflageelement
- 81: Koppelstange
- 82: Koppelauflage
- 9: Führung
- 10: Bahn
- 11: Abstützelement
- P1: Bewegungsrichtung Auflageelement
- P2: Bewegungsrichtung des Schlittens
- Alpha: Winkel zwischen Barriere und Schlitten in vertikaler Ebene
- Beta: Winkel zwischen der Bewegungsrichtung des Schlittens (P1) und der Barriere in horizontaler Ebene
- Gamma: Winkel zwischen Barriere und der Senkrechten zur Schlittenbewegung
- Delta: Winkel der Front des auf dem Schlitten abgestützten Fahrzeugteils gegenüber der Bewegungsrichtung des Schlittens (P2)

## Patentansprüche

1. Crashsimulationsanlage (1) für Kraftfahrzeuge (3) bestehend aus einem auf einer Bahn (10) beweglich angeordneten Schlitten (2), auf dem wenigstens Teile eines Fahrzeuges (3) angeordnet sind, wobei der Schlitten (2) durch wenigstens eine Antriebs- und/oder Bremseinrichtung (4) beschleunigbar und/oder verzögerbar ist,
**dadurch gekennzeichnet,**
**dass** das auf dem Schlitten (2) angeordnete Fahrzeug (3) oder dessen Teile sich an einer fest mit dem Schlitten (2) gekoppelten Barriere (5) abstützen, wobei die Abstützung so gestaltet ist, dass der Abstützpunkt in seiner Relativlage zur Barriere (5) verlagerbar ist.

2. Crashsimulationsanlage (1) für Kraftfahrzeuge (3), bestehend aus einem auf einer Bahn (10) beweglich angeordneten Schlitten (2), auf dem wenigstens Teile eines Fahrzeuges (3) angeordnet sind, die sich mittelbar an dem Schlitten (2) abstützen, wobei der Schlitten (2) durch wenigstens eine Antriebs- und/oder Bremseinrichtung (4) beschleunigbar und/oder verzögerbar ist,
**dadurch gekennzeichnet,**
**dass** das auf dem Schlitten angeordnete Fahrzeug (3) oder dessen Teile sich an einer fest mit dem Schlitten (2) gekoppelten Barriere (5) abstützen, wobei die Barriere (5) derart auf dem Schlitten angeordnet ist, dass sie in horizontaler Ebene gegenüber der Bewegungsrichtung des Schlittens einen Winkel (Beta) verschieden von 90° aufweist.

3. Crashsimulationsanlage für Kraftfahrzeuge nach Anspruch 1 - 2,
**dadurch gekennzeichnet,**
**dass** die Abstützung des Fahrzeuges (3) oder die Abstützung von Teilen des Fahrzeuges (3) an der Barriere (5) so gestaltet ist, dass sie ein Entlanggleiten des Abstützpunktes an der Barriere (5) ermöglicht.

4. Crashsimulationsanlage für Kraftfahrzeuge nach Anspruch 1 - 3,
**dadurch gekennzeichnet,**
**dass** die Abstützung des Fahrzeuges (3) oder die Abstützung von Teilen des Fahrzeuges (3) an der Barriere (5) hinsichtlich der Reibpaarung zwischen Abstützung und Barriere und/oder der Neigung der Barriere in horizontaler und/oder vertikaler Richtung und/oder der Abstützpunkt an der Barriere hinsichtlich seiner Position bezogen auf den Massenschwerpunkt des Fahrzeuges (3) so gestaltet ist, dass ein Entlanggleiten des Abstützpunktes an der Barriere (5) bei einer auftretenden Beschleunigung so erfolgt, dass unfallnahe Bewegungsbahnen- und Beschleunigungskurven im Fahrzeug (3) auftreten.

5. Crashsimulationsanlage für Kraftfahrzeuge nach einem der vorherigen Ansprüche,
**dadurch gekennzeichnet,**
**dass** in horizontaler Ebene der Winkel (Beta), den die mit dem Schlitten (2) verbundene Barriere (5) gegenüber der Bewegungsrichtung des Schlittens (2) aufweist, 60° ist.

6. Crashsimulationsanlage für Kraftfahrzeuge nach einem der vorherigen Ansprüche,
**dadurch gekennzeichnet,**
**dass** die mit dem Schlitten (2) verbundene Barriere (5) in horizontaler Ebene in ihrem Winkel (Beta) gegenüber der Bewegungsrichtung des Schlittens einstellbar ist.

7. Crashsimulationsanlage für Kraftfahrzeuge nach einem der vorherigen Ansprüche,
**dadurch gekennzeichnet,**
**dass** die mit dem Schlitten (2) verbundene Barriere (5) in vertikaler Ebene in ihrem Winkel (Gamma) gegenüber der Bewegungsrichtung des Schlittens (2) einen von 90° abweichenden Winkel (Gamma) aufweist.

8. Crashsimulationsanlage für Kraftfahrzeuge nach einem der vorherigen Ansprüche,
**dadurch gekennzeichnet,**
**dass** die mit dem Schlitten (2) verbundene Barriere (5) in vertikaler Ebene in ihrem Winkel (Gamma) gegenüber der Bewegungsrichtung des Schlittens (2) einstellbar ist.

9. Crashsimulationsanlage für Kraftfahrzeuge nach einem der vorherigen Ansprüche,
**dadurch gekennzeichnet,**
**dass** ein mit dem Fahrzeug (3) fest verbundenes Koppelelement (6) sich über ein Auflageelement (8) an der Barriere (5) abstützt, welches in wenigstens eine Richtung entlang der Barriere (5) bewegbar ist.

10. Crashsimulationsanlage für Kraftfahrzeuge nach Anspruch 7,
**dadurch gekennzeichnet,**
**dass** das mit dem Fahrzeug (3) fest verbundene Koppelelement (6) gegenüber dem Auflageelement (8) in seiner Winkellage veränderbar ist.

11. Crashsimulationsanlage für Kraftfahrzeuge nach einem der vorherigen Ansprüche,
**dadurch gekennzeichnet,**
**dass** das mit dem Fahrzeug fest verbundene Koppelelement (6) und das Auflageelement (8) aus einer Einheit bestehen.

12. Crashsimulationsanlage für Kraftfahrzeuge nach einem der vorherigen Ansprüche,
**dadurch gekennzeichnet,**
**dass** das Auflageelement (8) aus einer Koppelstange (81) und einer Koppelauflage (82) besteht, die vorzugsweise durch ein Kugelgelenk verbunden sind.

13. Crashsimulationsanlage für Kraftfahrzeuge nach einem der vorherigen Ansprüche,
**dadurch gekennzeichnet,**
**dass** die Koppelauflage (82) an der Barriere (5) bewegbar geführt ist.

14. Crashsimulationsanlage für Kraftfahrzeuge nach einem der vorherigen Ansprüche,
**dadurch gekennzeichnet,**
**dass** die Oberflächenpaarung von Koppelauflage (82) und Barriere (5) und/oder die Oberflächenpaarung von Koppelstange (81) und Koppelauflage (82) so gestaltet ist, dass sie der Relativbewegung von Koppelauflage (82) und Barriere (5) und/oder der Relativbewegung von Koppelstange (81) und Koppelauflage (82) einen Widerstand entgegensetzt.

15. Crashsimulationsanlage für Kraftfahrzeuge nach einem der vorherigen Ansprüche,
**dadurch gekennzeichnet,**
**dass** das auf dem Schlitten (2) angeordnete Fahrzeug (3) oder dessen Teile in vertikaler Richtung nachgiebig gegen den Schlitten (2) abgestützt ist.

16. Crashsimulationsanlage für Kraftfahrzeuge nach Anspruch 13,
**dadurch gekennzeichnet,**
**dass** das vertikal elastisch auf dem Schlitten (2) abgestützte Fahrzeug (3) oder dessen Teile von wenigstens einer Feder (7) in vertikaler Richtung gehalten werden.

17. Crashsimulationsanlage für Kraftfahrzeuge nach einem der vorherigen Ansprüche,
**dadurch gekennzeichnet,**
**dass** zusätzlich zur Abstützung durch die Federn (7) eine Führung des Fahrzeuges (3) auf dem Schlitten vorgesehen ist.

18. Crashsimulationsanlage (1) für Kraftfahrzeuge (3) bestehend aus einem auf einer Bahn (10) beweglich angeordneten Schlitten (2), auf dem wenigstens Teile eines Fahrzeuges (3) angeordnet sind, die sich mittelbar an dem Schlitten (2) abstützen, wobei der Schlitten (2) durch wenigstens eine Antriebs- und/oder Bremseinrichtung (4) beschleunigbar und/oder verzögerbar ist,
**dadurch gekennzeichnet,**
**dass** das auf dem Schlitten (2) abgestützte Fahrzeug (3) oder dessen Teile sich an einem fest mit dem Schlitten (2) gekoppelten Abstützelement (11) abstützen, wobei die Abstützung so gestaltet ist, dass sich die Front des abgestützten Fahrzeuges oder die Front von dessen Teilen direkt oder indirekt über ein Koppelelement (6) am Abstützelement (11) anlegt, wobei der Abstützpunkt in seiner Relativlage zum Abstützelement (11) verlagerbar ist.

19. Crashsimulationsanlage für Kraftfahrzeuge nach Anspruch 18,
**dadurch gekennzeichnet,**
**dass** die Abstützung der Front des Fahrzeuges (3) oder die Front des Koppelelements (6) gegenüber dem Abstützelement (11) so gestaltet ist, dass die Front des abgestützten Fahrzeugs oder des Koppelelements (6) in ihrer Relativlage zum Abstützelement (11) verlagerbar ist.

20. Crashsimulationsanlage für Kraftfahrzeuge nach einem der Ansprüche 18 bis 19,
**dadurch gekennzeichnet,**
**dass** die Front des auf dem Schlitten (2) abgestützten Fahrzeugs (3) oder die Front von dessen Teilen mittel- oder unmittelbar über das Koppelelement (6) am Abstützelement (11) anliegt.

21. Crashsimulationsanlage für Kraftfahrzeuge nach einem der Ansprüche 18-20,
**dadurch gekennzeichnet,**
**dass** die Front des auf dem Schlitten (2) mittel- oder unmittelbar abgestützten Fahrzeugs (3) oder die Front von dessen Teilen am Abstützelement (11) anliegt und in horizontaler Ebene einen gegenüber der Bewegungsrichtung des Schlittens (2) gemessenen Winkel (Delta) aufweist, der von 90° abweicht.

22. Crashsimulationsanlage für Kraftfahrzeuge nach einem der Ansprüche 18-21,
**dadurch gekennzeichnet,**
**dass** der Winkel (Delta) der Front des auf dem Schlitten (2) mittel- oder unmittelbar abgestützten Fahrzeugs (3) oder dessen Teile gegenüber der Bewegungsrichtung des Schlittens (2) 60° beträgt.

23. Crashsimulationsanlage für Kraftfahrzeuge nach Anspruch 18-22,
**dadurch gekennzeichnet,**
**dass** die Front des auf dem Schlitten (2) mittel- oder unmittelbar abgestützten Fahrzeugs (3) oder die Front von dessen Teilen, die am Abstützelement (11) anliegt in vertikaler Ebene einen gegenüber der Bewegungsrichtung des Schlittens (2) gemessenen Winkel aufweist, der von 90° abweicht.

24. Crashsimulationsanlage für Kraftfahrzeuge nach einem der Ansprüche 18-23,
**dadurch gekennzeichnet,**
**dass** das auf dem Schlitten (2) angeordnete Fahrzeug (3) oder dessen Teile in vertikaler Richtung nachgiebig gegen den Schlitten (2) abgestützt sind.

25. Crashsimulationsanlage für Kraftfahrzeuge nach Anspruch 24,
**dadurch gekennzeichnet,**
**dass** das vertikal elastisch auf dem Schlitten (2) abgestützte Fahrzeug (3) oder dessen Teile von wenigstens einer Feder (7) in vertikaler Richtung gehalten werden.

26. Crashsimulationsanlage für Kraftfahrzeuge nach einem der Ansprüche 18 -25,
**dadurch gekennzeichnet,**
**dass** zusätzlich zur Abstützung durch die Federn (7) eine Führung des Fahrzeuges (3) auf dem Schlitten vorgesehen ist.

27. Crashsimulationsanlage für Kraftfahrzeuge nach einem der vorherigen Ansprüche,
**dadurch gekennzeichnet,**
**dass** der Abstützpunkt des Fahrzeuges (3) an der Barriere (5) oder am Abstützelement (11) in horizontaler und/oder vertikaler Position einstellbar ist.

## Claims

1. Crash simulation system (1) for motor vehicles (3) consisting of a carriage (2) moveably arranged on a track (10) on which at least parts of a vehicle (3) are arranged, with the carriage (2) being capable of being accelerated and/or retarded by at least one drive and/or braking device (4),
**characterized in that**
the vehicle (3) or parts thereof arranged on the carriage (2) are supported on a barrier (5) firmly coupled to the carriage (2), with the support being embodied so that the position of the supporting point relative to the barrier (5) can be moved.

2. Crash simulation system (1) for motor vehicles (3) consisting of a carriage (2) moveably arranged on a track (10) on which at least parts of a vehicle (3) are arranged that are supported indirectly on the carriage (2), with the carriage (2) being capable of being accelerated and/or retarded by at least one drive and/or braking device (4),
**characterized in that**
the vehicle (3) or parts thereof arranged on the carriage are supported on a barrier (5) firmly coupled to the carriage (2), with the barrier (5) being arranged on the carriage in such a way that it has an angle (beta) in the horizontal plane relative to the direction of movement of the carriage that differs from 90°.

3. Crash simulation system for motor vehicles according to Claim 1 - 2,
**characterized in that**
the support of the vehicle (3) or the support of parts of the vehicle (3) on the barrier (5) is arranged so that the supporting point can slide along the barrier (5).

4. Crash simulation system for motor vehicles according to Claims 1 - 3,
**characterized in that**
the support of the vehicle (3) or the support of parts of the vehicle (3) on the barrier (5) is arranged with regard to the friction pairing between the support and barrier and/or the slope of the barrier in the horizontal and/or vertical direction and/or the supporting point on the barrier is arranged with regard to its position relative to the centre of mass of the vehicle (3) such that, when acceleration occurs, sliding of the supporting point along the barrier (5) takes place in such a way that movement path and acceleration curves in the vehicle (3) occur that closely simulate an accident.

5. Crash simulation system for motor vehicles according to one of the preceding claims,
**characterized in that**
in the horizontal plane, the angle (beta) of the barrier (5) connected to the carriage (2) is 60° relative to the direction of movement of the carriage (2).

6. Crash simulation system for motor vehicles according to one of the preceding claims,
**characterized in that**
the angle (beta) of the barrier (5) connected to the carriage (2) can be adjusted in the horizontal plane relative to the direction of movement of the carriage.

7. Crash simulation system for motor vehicles according to one of the preceding claims,
**characterized in that**
the barrier (5) connected to the carriage (2) has an angle (gamma) deviating from 90° in the vertical plane relative to the direction of movement of the carriage (2).

8. Crash simulation system for motor vehicles according to one of the preceding claims,
**characterized in that**
the angle (gamma) of the barrier (5) connected to the carriage (2) can be adjusted in the vertical plane relative to the direction of movement of the carriage (2).

9. Crash simulation system for motor vehicles according to one of the preceding claims,
**characterized in that**
a coupling element (6) firmly connected to the vehicle (3) is supported on the barrier (5) by a bearing element (8) which can move along the barrier (5) in at least one direction.

10. Crash simulation system for motor vehicles according to Claim 7,
**characterized in that**
the angle of the coupling element (6) firmly connected to the vehicle (3) is variable relative to the bearing element (8).

11. Crash simulation system for motor vehicles according to one of the preceding claims,
**characterized in that**
the coupling element (6) firmly connected to the vehicle and the bearing element (8) consist of a single unit.

12. Crash simulation system for motor vehicles according to one of the preceding claims,
**characterized in that**
the bearing element (8) consists of a coupling rod (81) and a coupling bearing point (82) that are preferably connected by a spherical joint.

13. Crash simulation system for motor vehicles according to one of the preceding claims,
**characterized in that**
the coupling bearing point (82) is guided on the barrier (5) so that it can move.

14. Crash simulation system for motor vehicles according to one of the preceding claims,
**characterized in that**
the surface pairing of the coupling bearing point (82) and barrier (5) and/or the surface pairing of the coupling rod (81) and coupling bearing point (82) are embodied so that they provide a resistance to the relative movement of the coupling bearing point (82) and barrier (5) and/or to the relative movement of the coupling rod (81) and coupling bearing point (82).

15. Crash simulation system for motor vehicles according to one of the preceding claims,
**characterized in that**
the vehicle (3) or parts thereof arranged on the carriage (2) are resiliently supported in the vertical direction against the carriage (2).

16. Crash simulation system for motor vehicles according to Claim 13,
**characterized in that**
the vehicle (3) or parts thereof resiliently supported vertically on the carriage (2) are held in the vertical direction by at least one spring (7).

17. Crash simulation system for motor vehicles according to one of the preceding claims,
**characterized in that**
in addition to support by the springs (7) a guide of the vehicle (3) is provided on the carriage.

18. Crash simulation system (1) for motor vehicles (3) consisting of a carriage (2) moveably arranged on a track (10) on which at least parts of a vehicle (3) are arranged that are supported indirectly on the carriage (2), with the carriage (2) being capable of being accelerated and/or retarded by at least one drive and/or braking device (4),
**characterized in that**
the vehicle (3) or parts thereof supported on the carriage (2) are supported on a supporting element (11) firmly coupled to the carriage (2), with the support being embodied so that the front of the supported vehicle or the front of the parts thereof lies directly, or indirectly through a coupling element (6), on the supporting element (11), with the position of the supporting point relative to the supporting element (11) being moveable.

19. Crash simulation system for motor vehicles according to Claim 18,
**characterized in that**
the support of the front of the vehicle (3) or the front of the coupling element (6) with respect to the supporting element (11) is embodied so that the position of the front of the supported vehicle or of the coupling element (6) can be moved relative to the supporting element (11).

20. Crash simulation system for motor vehicles according to one of Claims 18 to 19,
**characterized in that**
the front of the vehicle (3) or the front of the parts thereof supported on the carriage (2) lies directly, or indirectly via the coupling element (6), on the supporting element (11).

21. Crash simulation system for motor vehicles according to one of Claims 18 - 20,
**characterized in that**
the front of the vehicle (3) or the front of the parts thereof supported directly or indirectly on the carriage (2) lies against the supporting element (11) and in the horizontal plane has an angle (delta) measured relative to the direction of movement of the carriage (2) that deviates from 90°.

22. Crash simulation system for motor vehicles according to one of Claims 18 - 21,
**characterized in that**
the angle (delta) of the front of the vehicle (3) or parts thereof supported directly or indirectly on the carriage (2) is 60° relative to the direction of movement of the carriage (2).

23. Crash simulation system for motor vehicles according to one of Claims 18 - 22,
**characterized in that**
the front of the vehicle (3) or the front of the parts thereof supported directly or indirectly on the carriage (2) that lies against the supporting element (11) has an angle that deviates from 90° measured relative to the direction of movement of the carriage (2) in the vertical plane.

24. Crash simulation system for motor vehicles according to one of Claims 18 - 23,
**characterized in that**
the vehicle (3) or parts thereof arranged on the carriage (2) are resiliently supported in the vertical direction against the carriage (2).

25. Crash simulation system for motor vehicles according to Claim 24,
**characterized in that**
the vehicle (3) or parts thereof resiliently supported vertically on the carriage (2) are held in the vertical direction by at least one spring (7).

26. Crash simulation system for motor vehicles according to one of Claims 18 - 25,
**characterized in that**
in addition to the support by the springs (7) a guide of the vehicle (3) is provided on the carriage.

27. Crash simulation system for motor vehicles according to one of the preceding claims,
**characterized in that**
the supporting point of the vehicle (3) on the barrier (5) or on the supporting element (11) is adjustable with respect to its horizontal and/or vertical positions.

## Revendications

1. Système de simulation de collision (1) pour véhicules automobiles (3), se composant d'un chariot (2) disposé de manière déplaçable sur une piste (10), sur lequel au moins des pièces d'un véhicule (3) sont disposées, le chariot (2) pouvant être accéléré et/ou décéléré par au moins un dispositif d'entraînement et/ou de décélération (4),
**caractérisé en ce que**
le véhicule (3) disposé sur le chariot (2), ou ses pièces, s'appuient contre une barrière (5) accouplée fixement au chariot (2), le support étant configuré de telle sorte que le point de support puisse être déplacé dans sa position relative par rapport à la barrière (5).

2. Système de simulation de collision (1) pour véhicules automobiles (3), se composant d'un chariot (2) disposé de manière déplaçable sur une piste (10), sur lequel au moins des pièces d'un véhicule (3) sont disposées, lesquelles s'appuient de manière indirecte sur le chariot (2), le chariot (2) pouvant être accéléré et/ou décéléré par au moins un dispositif d'entraînement et/ou de décélération (4),
**caractérisé en ce que**
le véhicule (3) disposé sur le chariot , ou ses pièces, s'appuient contre une barrière (5) accouplée fixement au chariot (2), la barrière (5) étant disposée sur le chariot de telle sorte qu'elle présente, dans le plan horizontal par rapport au sens de déplacement du chariot, un angle (bêta) différent de 90°.

3. Système de simulation de collision pour véhicules automobiles selon la revendication 1 ou 2,
**caractérisé en ce que**
le support du véhicule (3) ou le support de pièces du véhicule (3) contre la barrière (5) est configuré de telle sorte qu'il permette un glissement du point de support le long de la barrière (5).

4. Système de simulation de collision pour véhicules automobiles selon l'une quelconque des revendications 1 à 3,
**caractérisé en ce que**
le support du véhicule (3) ou le support de pièces du véhicule (3) contre la barrière (5), en ce qui concerne l'appariement par frottement entre le support et la barrière et/ou l'inclinaison de la barrière dans la direction horizontale et/ou verticale, et/ou le point de support contre la barrière, en ce qui concerne sa position par rapport au centre de masse du véhicule (3), est configuré de telle sorte qu'un glissement du point de support le long de la barrière (5) s'effectue au cours d'une accélération de telle sorte que des courbes de trajectoires de déplacement et d'accélération proches de la réalité d'un accident se produisent dans le véhicule (3).

5. Système de simulation de collision pour véhicules automobiles selon l'une quelconque des revendications précédentes,
**caractérisé en ce que**
dans le plan horizontal, l'angle (bêta), formé par la barrière (5) connectée au chariot (2) par rapport au sens de déplacement du chariot (2), est de 60°.

6. Système de simulation de collision pour véhicules automobiles selon l'une quelconque des revendications précédentes,
**caractérisé en ce que**
l'angle (bêta) de la barrière (5) connectée au chariot (2) peut être ajusté dans le plan horizontal par rapport au sens de déplacement du chariot.

7. Système de simulation de collision pour véhicules automobiles selon l'une quelconque des revendications précédentes,
**caractérisé en ce que**
l'angle (gamma) de la barrière (5) connectée au chariot (2) dans le plan vertical par rapport au sens de déplacement du chariot (2) est un angle s'écartant de 90° (gamma).

8. Système de simulation de collision pour véhicules automobiles selon l'une quelconque des revendications précédentes,
**caractérisé en ce que**
l'angle (gamma) de la barrière (5) connectée au chariot (2) dans le plan vertical peut être ajusté par rapport au sens de déplacement du chariot (2).

9. Système de simulation de collision pour véhicules automobiles selon l'une quelconque des revendications précédentes,
**caractérisé en ce**
**qu'**un élément d'accouplement (6) connecté fixement au véhicule (3) s'appuie contre la barrière (5) par le biais d'un élément d'appui (8) qui peut être déplacé dans au moins une direction le long de la barrière (5).

10. Système de simulation de collision pour véhicules automobiles selon la revendication 7,
**caractérisé en ce que**
la position angulaire de l'élément d'accouplement (6) connecté fixement au véhicule (3) peut être modifiée par rapport à l'élément d'appui (8).

11. Système de simulation de collision pour véhicules automobiles selon l'une quelconque des revendications précédentes,
**caractérisé en ce que**
l'élément d'accouplement (6) connecté fixement au véhicule et l'élément d'appui (8) sont constitués d'une unité.

12. Système de simulation de collision pour véhicules automobiles selon l'une quelconque des revendications précédentes,
**caractérisé en ce que**
l'élément d'appui (8) se compose d'une barre d'accouplement (81) et d'un appui d'accouplement (82) qui sont de préférence connectés par une articulation à rotule.

13. Système de simulation de collision pour véhicules automobiles selon l'une quelconque des revendications précédentes,
**caractérisé en ce que**
l'appui d'accouplement (82) est guidé de manière déplaçable contre la barrière (5).

14. Système de simulation de collision pour véhicules automobiles selon l'une quelconque des revendications précédentes,
**caractérisé en ce que**
l'appariement des surfaces de l'appui d'accouplement (82) et de la barrière (5) et/ou l'appariement des surfaces de la barre d'accouplement (81) et de l'appui d'accouplement (82) sont configurés de telle sorte qu'ils opposent une résistance au mouvement relatif de l'appui d'accouplement (82) et de la barrière (5) et/ou au mouvement relatif de la barre d'accouplement (81) et de l'appui d'accouplement (82).

15. Système de simulation de collision pour véhicules automobiles selon l'une quelconque des revendications précédentes,
**caractérisé en ce que**
le véhicule (3) disposé sur le chariot (2), ou ses pièces, sont supportés dans la direction verticale de manière flexible contre le chariot (2).

16. Système de simulation de collision pour véhicules automobiles selon la revendication 13,
**caractérisé en ce que**
le véhicule (3) supporté verticalement et élastiquement sur le chariot (2), ou ses pièces, sont maintenus par au moins un ressort (7) dans la direction verticale.

17. Système de simulation de collision pour véhicules automobiles selon l'une quelconque des revendications précédentes,
**caractérisé en ce**
**qu'**en plus du support par les ressorts (7), on prévoit un guidage du véhicule (3) sur le chariot (2).

18. Système de simulation de collision (1) pour véhicules automobiles (3), se composant d'un chariot (2) disposé de manière déplaçable sur une piste (10), sur lequel au moins des pièces d'un véhicule (3) sont disposées, lesquelles s'appuient de manière indirecte sur le chariot (2), le chariot (2) pouvant être accéléré et/ou décéléré par au moins un dispositif d'entraînement et/ou de décélération (4),
**caractérisé en ce que**
le véhicule (3) supporté sur le chariot (2), ou ses pièces, s'appuient contre un élément de support (11) accouplé fixement au chariot (2), le support étant configuré de telle sorte que la partie avant du véhicule supporté ou la partie avant de ses pièces s'applique directement ou indirectement par le biais d'un élément d'accouplement (6) contre l'élément de support (11), le point de support pouvant être déplacé dans sa position relative par rapport à l'élément de support (11).

19. Système de simulation de collision pour véhicules automobiles selon la revendication 18,
**caractérisé en ce que**
le support de la partie avant du véhicule (3) ou la partie avant de l'élément d'accouplement (6) sont configurés par rapport à l'élément de support (11) de telle sorte que la partie avant du véhicule supporté ou de l'élément d'accouplement (6) puisse être déplacée dans sa position relative par rapport à l'élément de support (11).

20. Système de simulation de collision pour véhicules automobiles selon l'une quelconque des revendications 18 à 19,
**caractérisé en ce que**
la partie avant du véhicule (3) supporté sur le chariot (2) ou la partie avant de ses pièces s'applique indirectement ou directement par le biais de l'élément d'accouplement (6) contre l'élément de support (11).

21. Système de simulation de collision pour véhicules automobiles selon l'une quelconque des revendications 18 à 20,
**caractérisé en ce que**
la partie avant du véhicule (3) supporté indirectement ou directement sur le chariot (2) ou la partie avant de ses pièces s'applique contre l'élément de support (11) et présente, dans le plan horizontal, un angle (delta) mesuré par rapport au sens de déplacement du chariot (2), qui s'écarte de 90°.

22. Système de simulation de collision pour véhicules automobiles selon l'une quelconque des revendications 18 à 21,
**caractérisé en ce que**
l'angle (delta) de la partie avant du véhicule (3) supporté indirectement ou directement sur le chariot (2) ou de ses pièces, par rapport au sens de déplacement du chariot (2), est de 60°.

23. Système de simulation de collision pour véhicules automobiles selon l'une quelconque des revendications 18 à 22,
**caractérisé en ce que**
la partie avant du véhicule (3) supporté indirectement ou directement sur le chariot (2) ou la partie avant de ses pièces, qui s'applique contre l'élément de support (11), présente dans le plan vertical un angle mesuré par rapport au sens de déplacement du chariot (2), qui s'écarte de 90°.

24. Système de simulation de collision pour véhicules automobiles selon l'une quelconque des revendications 18 à 23,
**caractérisé en ce que**
le véhicule (3) disposé sur le chariot (2), ou ses pièces, sont supportés dans la direction verticale de manière flexible contre le chariot (2).

25. Système de simulation de collision pour véhicules automobiles selon la revendication 24,
**caractérisé en ce que**
le véhicule (3) supporté verticalement et élastiquement sur le chariot (2), ou ses pièces, sont maintenus par au moins un ressort (7) dans la direction verticale.

26. Système de simulation de collision pour véhicules automobiles selon l'une quelconque des revendications 18 à 25,
**caractérisé en ce que**
l'on prévoit, en plus du support par les ressorts (7), un guidage du véhicule (3) sur le chariot.

27. Système de simulation de collision pour véhicules automobiles selon l'une quelconque des revendications précédentes,
**caractérisé en ce que**
le point de support du véhicule (3) contre la barrière (5) ou contre l'élément de support (11) peut être ajusté dans la position horizontale et/ou verticale.
